# EUROPEAN PATENT SPECIFICATION

(11) **EP 4 049 874 B1**
(45) Date of publication and mention of the grant of the patent: **26.03.2025**
(21) Application number: 22154613.8
(22) Date of filing: 01.02.2022
(51) Int. Cl.: B60K 6/20, B60K 6/48, B60K 6/547, B60W 10/02, B60W 10/08, B60W 20/15

(54) **CONTROL DEVICE FOR HYBRID VEHICLE**
STEUERUNGSVORRICHTUNG FÜR HYBRIDFAHRZEUG
DISPOSITIF DE COMMANDE POUR VÉHICULE HYBRIDE

(30) Priority: 26.02.2021 JP 2021030400
(43) Date of publication of application: 31.08.2022
(73) Proprietor: Suzuki Motor Corporation, Hamamatsu-shi, Shizuoka 432-8611 (JP)
(72) Inventor: HANADA, Kei, Hamamatsu-shi 432-8611 (JP)
(74) Representative: Henkel & Partner mbB

(56) References cited:
- WO-A2-2013/104868
- JP-A- 2020 104 614
- US-A1- 2013 166 129

## Description

### [Technical Field]

The present invention relates to a control device for a hybrid vehicle.

### [Background Art]

JP 2020-104614 A discloses a motor torque control device for a hybrid vehicle where an engine and a motor generator are connected with each other via an automatic clutch and the motor generator and a manual transmission are connected with each other via a manual clutch, the motor torque control device including an ECU to switch between travel modes, one of them being an EV mode where the automatic clutch is released to cause a hybrid vehicle to travel by power from the motor generator, the other being an HEV mode where the automatic clutch is engaged to cause the hybrid vehicle to travel by power from the engine or power from the engine and the motor generator.

In the motor torque control device for a hybrid vehicle, to prevent a driver from being confused about a driving operation due to differing starting operations in respective travel modes, in a case where, at the time of starting the hybrid vehicle, an MG rotational speed falls within a low rotation region corresponding to a rotational speed equal to or lower than the idle rotational speed of the engine, the ECU reduces an MG torque to prevent the hybrid vehicle from being easily started.

US 2013/166129 A1 discloses a vehicle, control method and computer program with which reliable starting is possible without modifying hardware. When a clutch is disconnected, an inverter determines whether the time period in which the absolute value of the rotational speed of a motor becomes a predetermined first threshold or less and the torque of the motor becomes a predetermined second threshold or greater has continuously equalled or exceeded a predetermined third threshold. When the clutch is disconnected and it is determined that the time period in which the absolute value of the rotational speed of the motor becomes the predetermined first threshold or less and the torque of the motor becomes the predetermined second threshold or greater has continuously equalled or exceeded the predetermined third threshold, an HV-ECU controls the motor to restrict the torque of the motor and also controls the clutch to connect the clutch.

WO 2013/104868 A2 discloses a method for cutting off an electric motor of a hybrid vehicle that further comprises a combustion engine, in which method: the magnitude of a parameter indicative of the speed of the electric motor as delivered by a sensor is compared against a predefined threshold value, and the electric motor is cut off when the value delivered by the sensor is below said threshold value.

### [Citation List]

### [Patent Literature]

[Patent Literature 1] JP 2020-104614 A
[Patent Literature 2] US 2013/166129 A1
[Patent Literature 3] WO 2013/104868 A2

### [Summary of Invention]

### [Technical Problem]

In the above-mentioned conventional motor torque control device for a hybrid vehicle, the MG torque is controlled such that the EV mode and the HEV mode have the same behavior of a driving force outputted from a driving force source at the time of starting. However, the above-mentioned conventional motor torque control device for a hybrid vehicle is yet to achieve reproduction of the behavior at the time of engine stalling of a conventional manual transmission mounted vehicle where an internal combustion engine is used as a power source and hence, there is still room for improvement.

The present invention has been made in view of the above-mentioned circumstances, and an object thereof is to provide a motor torque control device for a hybrid vehicle that can reproduce behavior of the conventional manual transmission mounted vehicle at the time of engine stalling.

### [Solution to Problem]

There is provided a control device for a hybrid vehicle with an EV mode as a travel mode, as set out in independent claim 1. Advantageous developments are defined in the dependent claims.

### [Advantageous Effect of Invention]

According to the present invention, it is possible to provide a control device for a hybrid vehicle that can reproduce behavior of the conventional manual transmission mounted vehicle at the time of engine stalling.

### [Brief Description of Drawings]

Figure 1 is a schematic configuration diagram of a hybrid vehicle according to an embodiment of the present invention.
Figure 2 is a flowchart showing the flow of a process to be performed by an ECU mounted on the hybrid vehicle.
Figure 3 is a schematic configuration diagram of the hybrid vehicle.

### [Description of Embodiment]

A control device according to an embodiment of the present invention is mounted on a hybrid vehicle with an EV mode as a travel mode, the hybrid vehicle including: an engine, a transmission configured to change rotation of the engine at a transmission gear ratio corresponding to one of gear stages which is established, and output the changed rotation to a driving wheel, a clutch configured to be switched between an engaged state where power is transmitted between the engine and the transmission, and a release state where the power is not transmitted therebetween, and a motor to transmit power thereof to the driving wheel, the transmission being configured to switch the established gear stage to another one in response to an operation of a clutch pedal and an operation of a shift lever by a driver, the control device including a control unit to cause, in the EV mode, the clutch to be released to thereby cause the hybrid vehicle to travel by the power from the motor without using the power of the engine, the control unit being configured to perform, during the traveling in the EV mode, a pseudo engine stall control of reducing a torque of the motor if a motor rotational speed falls below a rotational speed that corresponds to an idle rotational speed of the engine, wherein the control unit performs, upon performing the pseudo engine stall control, a rotation suppressing control of suppressing rotation of the driving wheel.

### [Embodiment]

Hereinafter, a hybrid vehicle on which a control device according to an embodiment of the present invention is mounted will be described with reference to drawings.

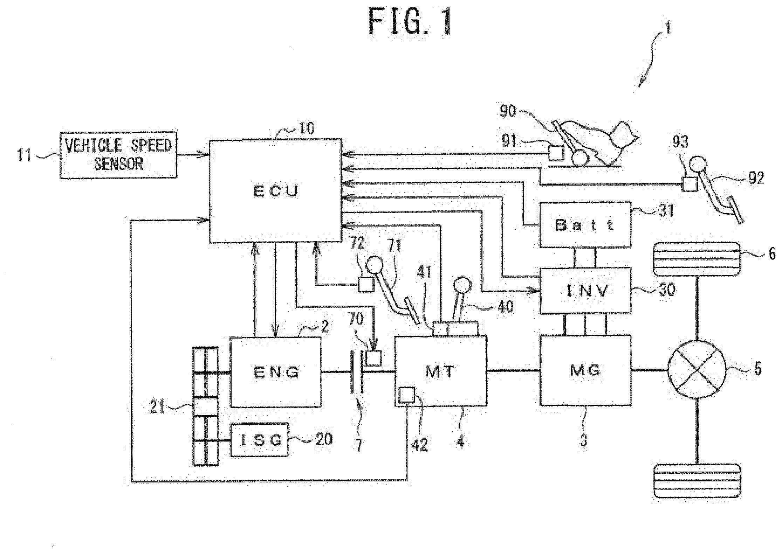

As shown in Figure 1, a hybrid vehicle 1 according to the embodiment includes an engine 2, a motor generator 3 serving as a motor, a manual transmission 4 serving as a transmission, a differential 5, driving wheels 6, and an electric control unit (ECU) 10 serving as a control unit.

A plurality of cylinders are formed in the engine 2. In this embodiment, the engine 2 is configured to perform, for each cylinder, a series of four strokes of an intake stroke, a compression stroke, an expansion stroke, and an exhaust stroke.

An integrated starter generator (ISG) 20 is coupled to the engine 2. The ISG 20 is coupled to the crankshaft of the engine 2 via a power transmission member 21 such as a belt. The ISG 20 has a function as an electric motor that is rotated with the supply of electric power to thereby rotationally drive the engine 2, and a function as a generator that converts a rotational force inputted from the crankshaft to electric power.

The motor generator 3 has a function as an electric motor that is driven by electric power supplied from a battery 31 via an inverter 30, and a function as a generator that performs regenerative power generation by a reverse driving force inputted from the differential 5.

The motor generator 3 is provided on a power transmission path between the manual transmission 4 and the left and right driving wheels 6, and is connected to the left and right driving wheels 6 so as to transmit power thereto.

Under the control of the ECU 10, the inverter 30 converts DC electric power supplied from the battery 31 to three-phase AC electric power to supply the converted three-phase AC electric power to the motor generator 3, and converts three-phase AC electric power generated by the motor generator 3 to DC electric power to charge the battery 31.

The battery 31 is a secondary battery, such as a lithium ion battery, for example.

The manual transmission 4 is configured to change the rotation outputted from the engine 2 at a transmission gear ratio corresponding to one of a plurality of gear stages which is established and output the changed rotation to the left and right driving wheels 6. The output shaft of the manual transmission 4 is connected to the left and right driving wheels 6 via the differential 5. The output shaft of the motor generator 3 is connected to the output shaft of the manual transmission 4. That is, the motor generator 3 and the manual transmission 4 are connected to the driving wheels 6 so that each of the motor generator 3 and the manual transmission 4 can singly transmit a driving force. A driving force of the engine 2 that is changed by the manual transmission 4 and a driving force of the motor generator 3 are transmitted to the driving wheels 6.

The gear stages that can be established by the manual transmission 4 include gear stages for forward traveling from the first gear stage of the low speed stage to the fifth gear stage of the high speed stage, and the reverse stage, for example. The number of gear stages for traveling varies depending on various elements of the hybrid vehicle 1, and is not limited to the above-mentioned first to fifth gear stages.

The gear stage of the manual transmission 4 can be switched in response to the operation of a clutch pedal 71 and a shift lever 40 by the driver. The operation position of the shift lever 40 is detected by a shift position sensor 41. The shift position sensor 41 is connected to the ECU 10, and is configured to send the detection result to the ECU 10.

The manual transmission 4 is provided with a neutral switch 42.

The neutral switch 42 is connected to the ECU 10. The neutral switch 42 is configured to detect a state where none of the gear stages are established in the manual transmission 4, i.e., detect that the manual transmission 4 is in a neutral state, and is turned on when the manual transmission 4 is in the neutral state.

A power transmission path between the engine 2 and the manual transmission 4 is provided with a clutch 7. A single plate dry friction clutch can be used for the clutch 7, for example. The engine 2 and the manual transmission 4 are connected with each other via the clutch 7.

A clutch actuator 70 is actuated with the operation of the clutch pedal 71 by the driver to thereby switch the clutch 7 to an engaged state where power is transmitted between the engine 2 and the manual transmission 4, a release state where power is not transmitted, or a partial clutch engagement state where a torque is transmitted with a rotational difference. In other words, in a state where a gear stage is established in the manual transmission 4, the clutch 7 is switched between an engaged state where the engine 2 and the driving wheels 6 are connected, and a release state where the engine 2 and the driving wheels 6 are disconnected. The clutch 7 is a clutch-by-wire clutch. The clutch actuator 70 is connected to the ECU 10 to be controlled thereby.

The ECU 10 controls the clutch actuator 70 in response to the depression amount of the clutch pedal 71 operated (depressed) by the driver so as to cause the clutch 7 to be released, achieving an action equivalent to that of a so-called manual clutch where the clutch pedal 71 and the clutch are mechanically linked and activated. In an EV mode which will be described later, the ECU 10 can release the clutch 7 with the clutch pedal 71 not operated by the driver, i.e., with the depression of the clutch pedal 71 not detected.

The depression amount of the clutch pedal 71 is detected by a clutch pedal sensor 72.

The clutch pedal sensor 72 is connected to the ECU 10, and is configured to send a signal corresponding to the depression amount of the clutch pedal 71 to the ECU 10.

The hybrid vehicle 1 includes an accelerator pedal 90 to be operated by the driver. The depression amount of the accelerator pedal 90 is detected by an accelerator opening sensor 91. The accelerator opening sensor 91 is connected to the ECU 10, is configured to detect the depression amount of the accelerator pedal 90 as an accelerator opening degree, and is configured to send a signal corresponding to the accelerator opening degree to the ECU 10.

The hybrid vehicle 1 includes a brake pedal 92 that is operated by the driver. The depression amount of the brake pedal 92 is detected by a brake pedal sensor 93. The brake pedal sensor 93 is connected to the ECU 10, and is configured to send a signal corresponding to the depression amount of the brake pedal 92 to the ECU 10.

The ECU 10 is constituted of a computer unit including a central processing unit (CPU), a random access memory (RAM), a read only memory (ROM), a flash memory that stores backup data and other data, an input port, and an output port.

The ROM of the computer unit stores a program for causing the computer unit to serve as the ECU 10 together with various constants, various mappings and the like. In other words, the CPU executes the program stored in the ROM using the RAM as the work area and thereby, the computer unit serves as the ECU 10 in this embodiment.

In addition to the above-mentioned sensors, a vehicle speed sensor 11 is connected to the ECU 10. The vehicle speed sensor 11 is configured to detect the vehicle speed of the hybrid vehicle 1, and send the detection result to the ECU 10.

The ECU 10 is configured to switch the hybrid vehicle 1 between the travel modes. In this embodiment, the EV mode and an HEV mode are set as travel modes.

The EV mode is one travel mode where the clutch 7 is released and the hybrid vehicle 1 is caused to travel by power from only the motor generator 3. The HEV mode is another travel mode where the clutch 7 is engaged and the hybrid vehicle 1 is caused to travel by power from the engine 2 or by power from both the engine 2 and the motor generator 3. To be more specific, in the EV mode of the hybrid vehicle 1 according to this embodiment, output characteristics and a speed range are set in accordance with the gear stage of the manual transmission 4 that is selected by the operation of the driver, and the hybrid vehicle 1 travels by an output (driving force) that corresponds to the depression amount of the accelerator pedal 90 depressed by the driver, the depression amount being detected by the accelerator opening sensor 91. On the other hand, in the HEV mode, the hybrid vehicle 1 is caused to travel by a driving force generated by the engine 2, using the motor generator 3 as auxiliary power.

The ECU 10 switches between the EV mode and the HEV mode based on an accelerator opening degree and an engine rotational speed, for example.

When a driver request torque, which is decided based on an accelerator opening degree, exceeds an HEV shift threshold during the traveling in the EV mode, for example, the ECU 10 restarts the engine 2 to shift the travel mode to the HEV mode.

When a driver request torque, which is decided by an accelerator opening degree and an engine rotational speed, falls below an EV shift threshold during the traveling in the HEV mode, for example, the ECU 10 stops the engine 2 to shift the travel mode to the EV mode.

In order to reproduce the characteristics of a stepped manual transmission in the hybrid vehicle 1 in the EV mode where a driving force is transmitted not via the manual transmission 4, the ECU 10 calculates, according to the selected gear stage of the manual transmission 4, a virtual engine rotational speed, a virtual engine torque, a virtual inertia torque, and the like that correspond to the current traveling speed based on the operation states of the accelerator pedal 90 and the clutch pedal 71. An output from the motor generator 3 is adjusted based on these calculation results.

The ECU 10 performs a pseudo engine stall control when, during traveling in the EV mode, the rotational speed of the motor generator 3 (hereinafter referred to as "motor rotational speed") falls below a rotational speed (hereinafter referred to as "MG_idle rotational speed" or "predetermined motor idle rotational speed") that corresponds to the idle rotational speed of the engine 2 at the selected gear stage of the manual transmission 4. This pseudo engine stall control is performed when the clutch pedal 71 is not operated (not depressed) by the driver. The pseudo engine stall control reduces the torque of the motor generator 3 (hereinafter referred to as "motor torque") to thereby simulatively reproduce an engine stalling as if the engine 2 stalls. In the pseudo engine stall control, it is preferable to control a motor torque to zero. Additionally, in the pseudo engine stall control, although the pseudo engine stall control is performed with a threshold set as a rotational speed in response to the established gear stage, the threshold may be controlled to be changed in response to the depression amount of the accelerator pedal 90 detected by the accelerator opening sensor 91. That is, even in the case where the motor rotational speed falls below the MG_idle rotational speed, if the accelerator pedal 90 is significantly depressed, the threshold is set as a lower one, thereby allowing output characteristics that correspond to the established gear stage to be maintained without immediately performing the pseudo engine stall control. By performing such a control, it is possible to cause a traveling state in the EV mode to approximate to that in using the engine 2 as the driving force. To be described later, the ECU 10 may be configured to perform the pseudo engine stall control when the motor rotational speed falls below a predetermined rotational speed Nmth.

When the above-mentioned pseudo engine stall control is performed to thereby further reduce the motor rotational speed, the ECU 10 performs a rotation suppressing control of suppressing the rotation of the driving wheels 6.

Specifically, the ECU 10 performs the rotation suppressing control when the motor rotational speed becomes, during the pseudo engine stall control, equal to or lower than the predetermined rotational speed Nmth lower than the MG_idle rotational speed. That is, after the pseudo engine stall control is performed, when the motor rotational speed is not increased by the operation of the accelerator pedal 90 and the clutch pedal 71 and the motor rotational speed is further reduced, the rotation suppressing control is performed.

The predetermined rotational speed Nmth may be changed according to the established gear stage. The braking effect on the vehicle body due to the engine 2 varies with the respective gear stages. Thus, in a low speed stage having a large braking effect, it is possible to use the lower predetermined rotational speed Nmth than in a high speed stage. Due thereto, the rotation suppressing control can be relatively gently performed even at the low speed stage, and it is possible to enhance the possibility that the motor rotational speed is increased by the operation of the accelerator pedal 90 in the low speed stage, approximating to the behavior of the conventional manual transmission mounted vehicle.

Further, the ECU 10 may be configured to perform both the pseudo engine stall control and the rotation suppressing control at the same time if the motor rotational speed falls below the MG_idle rotational speed. Additionally, the ECU 10 may be configured to perform both the pseudo engine stall control and the rotation suppressing control at the same time if the motor rotational speed falls below the predetermined rotational speed Nmth.

The rotation suppressing control is of causing the clutch 7 to be engaged to thereby allow the engine 2 and the manual transmission 4 to be interconnected so that power can be transmitted therebetween. The rotation suppressing control is performed if any one of the gear stages is established in the manual transmission 4. That is, in this rotation suppressing control, the ECU 10 causes the clutch 7 to be engaged to suppress the rotation of the driving wheels 6 by making use of the engine 2 in a stopped state. To be more specific, when the clutch 7 is engaged, the friction torque and a motoring (idling) torque in/for the stopped engine 2 become a load, so that the rotation of the driving wheels 6 is suppressed. Due thereto, the behavior (vehicle state) of the hybrid vehicle 1 when the pseudo engine stall control is performed becomes substantially equal to that of the conventional manual transmission mounted vehicle at the time of engine stalling. Additionally, the behavior of the hybrid vehicle 1 when the pseudo engine stall control is performed becomes also substantially equal to that of the hybrid vehicle 1 at the time of engine stalling in the HEV mode. That is, a vehicle state of the conventional manual transmission mounted vehicle at the time of engine stalling, including a display in a meter, is reproduced in the hybrid vehicle in the EV mode. The driver can realize from the display in the meter that the vehicle is in a state different from a state where the engine 2 is stopped due to an idling stop, causing the driver not to perform a normal operation of restart from idling stop but to perform the operation to be performed at the time of engine stalling without mistake. Specifically, so as to restart the engine only by depressing the clutch pedal 71, when the clutch pedal 71 is depressed, the rotation suppressing control and the pseudo engine stall control are finished and the clutch 7 is released, and at the same time, the display in the meter is changed into another one indicating a traveling state.

If the clutch 7 is suddenly engaged due to the rotation suppressing control, the sudden brake is applied to the vehicle body by the engine 2 in a stopped state. For this reason, the clutch 7 may be engaged in such a manner that a vehicle speed is gradually reduced relatively gently, or the clutch 7 may be engaged after a vehicle speed assumes an extremely low speed. Further, when the rotation suppressing control is to be performed, if the clutch pedal 71 is operated by the driver, instead of simple engagement of the released clutch 7 in the EV mode, the clutch 7 may be shifted to a position corresponding to the operation position of the operated clutch pedal 71 in advance, and thereafter the engagement of the clutch 7 may be started from the shifted position at the same time of starting the rotation suppressing control.

If the clutch pedal 71 is operated by the driver during the above-mentioned rotation suppressing control, the ECU 10 stops the rotation suppressing control. That is, if the clutch pedal 71 is depressed by the driver during the rotation suppressing control, the ECU 10 releases the clutch 7 to cancel (end) the rotation suppressing control. Due thereto, the rotation suppression of the driving wheels 6 is cancelled by the depression of the clutch pedal 71 and hence, such a behavior of the hybrid vehicle 1 is also equal to that of the hybrid vehicle 1 when the clutch pedal 71 is depressed at the time of engine stalling in the HEV mode.

It is assumed that the above-mentioned rotation suppressing control is to be performed when the speed of the hybrid vehicle 1 in a traveling state is reduced so that the motor rotational speed is dramatically reduced, or when the driver erroneously selects a gear stage in the hybrid vehicle 1 in a traveling state so that the motor rotational speed is dramatically reduced. In contrast, when the hybrid vehicle 1 is started, it is difficult to predict, based on only the motor rotational speed, whether the hybrid vehicle 1 in the HEV mode (or the conventional manual transmission mounted vehicle) would be in a situation where an engine stalling occurs. That is, the above-mentioned engine stalling determination during traveling in the EV mode (motor rotational speed < MG_idle rotational speed) can be performed in a case where the vehicle speed is relatively high, but cannot be performed in respective cases where the hybrid vehicle 1 is stopped and the vehicle speed is extremely low, as a result, the rotation suppressing control based on the predetermined rotational speed Nmth is not performed in the respective cases. Specifically, in the case where the hybrid vehicle 1 is stopped or where the vehicle speed is yet to exceed a predetermined vehicle speed Vth after the hybrid vehicle 1 is started, the ECU 10 does not start the rotation suppressing control based on the predetermined rotational speed Nmth. However, in such a case, instead of the engine stalling determination during traveling in the EV mode, an engine stalling determination at the time of start of the hybrid vehicle 1 may be performed to start the pseudo engine stall control to thereby start the rotation suppressing control immediately thereafter. The engine stalling determination at the time of start of the hybrid vehicle 1 is made by the ECU 10 based on the operation states of the clutch pedal 71 and the accelerator pedal 90 that are operated by the driver, by taking into account an established gear stage and a traveling resistance of the hybrid vehicle 1, such as, the gradient of a road surface.

Note that the predetermined vehicle speed Vth is an extremely low vehicle speed that is close to zero.

When the motor rotational speed decreases with the speed of the hybrid vehicle 1 reduced, the predetermined rotational speed Nmth is set according to the established gear stage. For example, when a mid-to-high speed stage of the third gear stage or higher is established, the predetermined rotational speed Nmth is set as a first rotational speed Nm1. When a low speed stage is established, the predetermined rotational speed Nmth is set as a second rotational speed Nm2 lower than the first rotational speed Nm1.

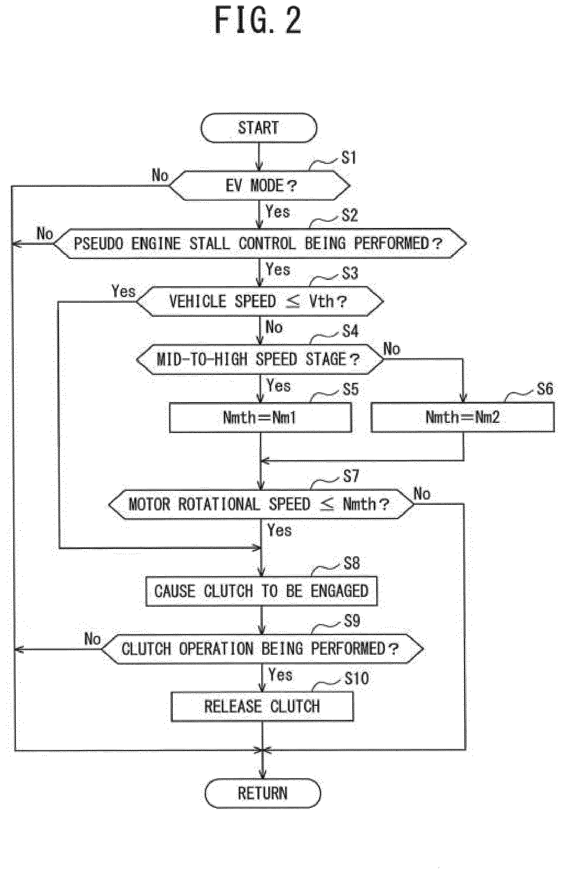

Next, the flow of process of the ECU 10 according to this embodiment will be described with reference to Figure 2. The process shown in Figure 2 is to be repeatedly performed at predetermined time intervals during the period in which the hybrid vehicle 1 is kept on.

As shown in Figure 2, the ECU 10 determines whether the travel mode of the hybrid vehicle 1 is the EV mode (step S1). When the ECU 10 determines in step S1 that the travel mode is not the EV mode, the process shown in Figure 2 is finished to be returned.

When the ECU 10 determines in step S1 that the travel mode is the EV mode, the ECU 10 determines whether the pseudo engine stall control should be performed (step S2). For example, in a case where the hybrid vehicle 1 travels in the EV mode, the ECU 10 can determine whether the pseudo engine stall control should be performed by determining whether the motor rotational speed is lower than the MG_idle rotational speed. Then, ECU 10 performs, following the determination, the pseudo engine stall control, proceeding to step S3. Note that in step S2 in the repeated process after the pseudo engine stall control is performed, the ECU 10 determines (checks) whether the pseudo engine stall control is being performed.

When the ECU 10 determines in step S2 that the pseudo engine stall control is not being performed (or determines that the pseudo engine stall control should not be performed), the process shown in Figure 2 is finished to be returned. When the ECU 10 determines in step S2 that the pseudo engine stall control is being performed (or determines that the pseudo engine stall control should be performed and performs it), the ECU 10 cause the process to proceed to step S3 to determine whether or not the vehicle speed is equal to or lower than the predetermined vehicle speed Vth.

When the ECU 10 determines in step S3 that the vehicle speed is equal to or lower than the predetermined vehicle speed Vth, the ECU 10 considers the pseudo engine stall control in step S2 as being performed at the time of vehicle start, and the process advances to processing in step S8 which will be described later. This is because, in such a case, the hybrid vehicle 1 can be considered as being substantially in a stopped state, making the determination (motor rotational speed ≤ predetermined rotational speed Nmth) for start of the rotation suppressing control unnecessary.

When the ECU 10 determines in step S3 that the vehicle speed is not equal to or lower than the predetermined vehicle speed Vth, the ECU 10 considers the pseudo engine stall control in step S2 as being performed at the time of vehicle traveling, and the process advances to processing in step S4.

The ECU 10 checks in step S4 whether the established gear stage is a mid-to-high speed stage of the third gear stage or higher. When the ECU 10 determines that this gear stage is the mid-to-high speed stage, the ECU 10 sets the predetermined rotational speed Nmth for determining start of the rotation suppressing control (step S5), as the first rotational speed Nm1, causing the process to proceed to step S7.

When the ECU 10 determines in step S4 that the gear stage is not the mid-to-high speed stage, the ECU 10 sets the predetermined rotational speed Nmth as the second rotational speed Nm2, causing the process to proceed to step S7. The second rotational speed Nm2 is a rotational speed lower than the first rotational speed Nm1.

In step S7, the ECU 10 determines whether or not the motor rotational speed is equal to or lower than the predetermined rotational speed Nmth. When the ECU 10 determines in step S7 that the motor rotational speed is not equal to or lower than the predetermined rotational speed Nmth, the process shown in Figure 2 is finished to be returned.

When the ECU 10 determines in step S7 that the motor rotational speed is equal to or lower than the predetermined rotational speed Nmth, the ECU 10 actuates the clutch actuator 70 to cause the clutch 7 to be engaged and thereby, the rotation suppressing control is performed (step S8). With such an operation, the friction torque and a motoring (idling) torque in/for the stopped engine 2 become a load, so that the rotation of the driving wheels 6 is suppressed.

Next, the ECU 10 determines, during the period in which the above-mentioned rotation suppressing control is performed, whether a clutch operation is performed by the driver, that is, whether the clutch pedal 71 is depressed by the driver (step S9). When the ECU 10 determines in step S9 that the clutch operation is yet to be performed, the process shown in Figure 2 is finished to be returned. Note that in this case, since the process is returned to "START" to be repeated and the clutch is already engaged, the engaged state of the clutch is maintained in step S8 in the repeated process unless the clutch pedal 71 is depressed.

When the ECU 10 determines in step S9 that the clutch operation is performed, the clutch 7 in the engaged state is released (step S10), that is, the rotation suppressing control is cancelled, and the process shown in Figure 2 is finished.

As described above, the control device for a hybrid vehicle according to this embodiment is configured such that: the pseudo engine stall control is performed when the motor rotational speed falls below the MG_idle rotational speed in the EV mode, and thereafter the rotation suppressing control of suppressing the rotation of the driving wheels 6 is performed based on the motor rotational speed, the depression amount of the accelerator pedal 90, a change in vehicle speed and the operation state of the clutch pedal 71.

With such a configuration, the rotation of the driving wheels 6 is suppressed by the rotation suppressing control and hence, the control device for a hybrid vehicle according to this embodiment can reproduce, in the hybrid vehicle in the EV mode, behavior of the conventional manual transmission mounted vehicle at the time of engine stalling. In other words, the control device can reproduce the behavior in the hybrid vehicle, as if an engine stalling occurs in the conventional manual transmission mounted vehicle.

In the conventional manual transmission mounted vehicle, for example, when an engine stalling occurs on an inclined road, driving wheels and an engine are kept in connected to transmit power therebetween unless the driver performs an operation of releasing a clutch and hence, the friction torque and a motoring (idling) torque in/for the stopped engine 2 become a load whereby the rotation of the driving wheels is suppressed. With such a configuration, the conventional manual transmission mounted vehicle is prevented from rolling down the inclined road when an engine stalling occurs on the inclined road.

On the other hand, the control device for a hybrid vehicle according to this embodiment performs, during the EV mode where the clutch 7 is released, the above-mentioned rotation suppressing control when causing a pseudo engine stalling to occur on an inclined road, for example. Therefore, in the same manner as the conventional manual transmission mounted vehicle, the hybrid vehicle 1 can be prevented from rolling down.

As described above, the control device for the hybrid vehicle 1 according to this embodiment can reproduce, in the hybrid vehicle 1 in the EV mode, behavior of the conventional manual transmission mounted vehicle at the time of engine stalling. Accordingly, it is possible to suppress a driver in such a hybrid vehicle from feeling discomfort, thereby improving a commercial value.

The behavior of the hybrid vehicle 1 in the EV mode when the pseudo engine stall control is performed, is equal to that of the hybrid vehicle 1 at the time of engine stalling in the HEV mode and hence, it is possible to prevent a driver to be caused to feel discomfort due to difference in behavior of the hybrid vehicle between the EV mode and the HEV mode. Further, the EV mode and the HEV mode can have the same vehicle state and hence, the same operation can be adopted for restart or the like thereafter.

The control device for a hybrid vehicle according to this embodiment is configured to perform the rotation suppressing control if the motor rotational speed becomes equal to or lower than the predetermined rotational speed Nmth when the pseudo engine stall control is performed during vehicle traveling in the EV mode, which is lower than the MG_idle rotational speed, during the period in which the pseudo engine stall control is performed.

With such a configuration, the control device for a hybrid vehicle according to this embodiment can make the behavior of the hybrid vehicle 1 when the pseudo engine stall control is performed further approximate the behavior of the conventional manual transmission mounted vehicle at the time of engine stalling.

The control device for a hybrid vehicle according to this embodiment suppresses, in the rotation suppressing control, the rotation of the driving wheels 6 by causing the clutch 7 to be engaged. Accordingly, in the same manner as the conventional manual transmission mounted vehicle, a load, such as a friction torque and a motoring (idling) torque in the stopped engine 2 can be utilized for suppressing the rotation of the driving wheels 6.

The control device for a hybrid vehicle according to this embodiment stops the rotation suppressing control if the clutch pedal 71 is operated by the driver and hence, in the same manner as the conventional manual transmission mounted vehicle, a power transmission path between the driving wheels 6 and the engine 2 can be shut off. Therefore, it is possible to make the behavior when the clutch pedal 71 is operated in a state where the rotation of the driving wheels 6 is suppressed substantially equal to the corresponding behavior of the conventional manual transmission mounted vehicle.

In the control device for a hybrid vehicle according to this embodiment, the predetermined rotational speed Nmth is set to be lower as the established gear stage is lower.

With such a configuration, the control device for a hybrid vehicle according to this embodiment can prevent the rotation suppressing control from being easily performed when the motor rotational speed is reduced due to an error in a shift operation during traveling or when the motor rotational speed is reduced due to a reduction in vehicle speed, for example.

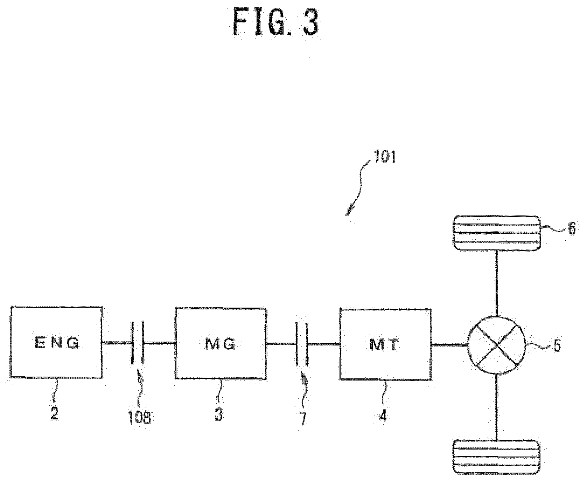

In this embodiment, the description has been made with respect to an example where the control device for a hybrid vehicle according to the present invention is applied to the hybrid vehicle 1 shown in Figure 1. However, the configuration is not limited to the above, and the control device for a hybrid vehicle according to the present invention may be applied to a hybrid vehicle 101 according to a modification shown in Figure 3.

As shown in Figure 3, the hybrid vehicle 101 according to the modification is a vehicle of a type where the motor generator 3 is provided on a power transmission path between the engine 2 and the manual transmission 4. In this modification, components identical to the corresponding components in this embodiment are given the same reference symbols.

Further, an automatic clutch 108 is provided between the engine 2 and the motor generator 3, and engagement or release of the automatic clutch 108 is controlled by an ECU (not shown in Figure 3). The clutch 7 is actuated by a clutch actuator with the operation of a clutch pedal performed by the driver, and is provided between the motor generator 3 and the manual transmission 4 as a manual clutch.

Also in the hybrid vehicle 101 according to this modification, when the pseudo engine stall control is performed, the ECU performs the rotation suppressing control of suppressing the rotation of the driving wheels 6 by causing the clutch 7 and the automatic clutch 108 each to be in the engaged state. Note that in the hybrid vehicle 101, during traveling in the EV mode, the clutch 7 is engaged but the automatic clutch 108 is released. Thus, when performing the rotation suppressing control, the automatic clutch 108 is engaged with the clutch 7 engaged.

The hybrid vehicle 101 according to this modification can also obtain advantageous effects substantially equal to advantageous effects of this embodiment.

Although the embodiment of the present invention has been disclosed, it is apparent that modifications may be applied by those who are skilled in the art without departing from the scope of the present invention as defined by the appended claims. All of such modifications and equivalents are intended to be encompassed by the following claims.

### [Reference Signs List]

1, 101: hybrid vehicle
2: engine
3: motor generator (motor)
4: manual transmission (transmission)
6: driving wheel
7: clutch
10: ECU (control unit)
11: vehicle speed sensor
40: shift lever
41: shift position sensor
70: clutch actuator
71: clutch pedal
72: clutch pedal sensor
90: accelerator pedal
91: accelerator opening sensor

## Claims

1. A control device for a hybrid vehicle (1, 101) with an EV mode as a travel mode,
the hybrid vehicle including:
an engine (2),
a transmission (4) configured to change rotation of the engine (2) at a transmission gear ratio corresponding to one of gear stages which is established, and output the changed rotation to a driving wheel (6),
a clutch (7, 108) configured to be switched between an engaged state where power is transmitted between the engine (2) and the transmission (4), and a release state where the power is not transmitted therebetween, and
a motor (3) to transmit power thereof to the driving wheel (6),
the transmission (4) being configured to switch the established gear stage to another one in response to an operation of a clutch pedal (71) and an operation of a shift lever (40) by a driver,
the control device comprising
a control unit (10) to cause, in the EV mode, the clutch (7, 108) to be released to thereby cause the hybrid vehicle to travel by the power from the motor (3) without using the power of the engine (2), the control unit (10) being configured to perform, during the traveling in the EV mode, a pseudo engine stall control of reducing a torque of the motor (3) if a motor rotational speed falls below a rotational speed that corresponds to an idle rotational speed of the engine (2),
the control device being **characterized by**
the control unit (10) performing, upon performing the pseudo engine stall control, a rotation suppressing control of suppressing rotation of the driving wheel (6).

2. The control device as claimed in claim 1, wherein
the control unit (10) performs the rotation suppressing control if the motor rotational speed is equal to or lower than a predetermined rotational speed lower than the rotational speed that corresponds to the idle rotational speed of the engine (2).

3. The control device as claimed in claim 1 or 2, wherein the control unit (10) suppresses the rotation of the driving wheel (6) by causing the clutch (7, 108) to be engaged in the rotation suppressing control.

4. The control device as claimed in any one of claim 1 to 3, wherein the control unit (10) stops the rotation suppressing control with the operation of the clutch pedal (71) performed by the driver.

5. The control device as claimed in any one of claim 2 to 4, wherein the predetermined rotational speed is set depending on the established gear stage, the predetermined rotational speed being lower as the established gear stage is lower.

## Patentansprüche

1. Eine Steuervorrichtung für ein Hybridfahrzeug (1, 101) mit einem EV-Modus als Fahrmodus,
wobei das Hybridfahrzeug Folgendes umfasst:
eine Maschine (2),
ein Getriebe (4), das konfiguriert ist, um eine Drehung der Maschine (2) bei einem Getriebeübersetzungsverhältnis zu ändern, das zu einer der Gangstufen korrespondiert, die eingerichtet ist, und die geänderte Drehung an ein Antriebsrad (6) auszugeben,
eine Kupplung (7, 108), die konfiguriert ist, um zwischen einem eingerückten Zustand, in dem Leistung zwischen der Maschine (2) und dem Getriebe (4) übertragen wird, und einem ausgerückten Zustand, in dem die Leistung zwischen diesen nicht übertragen wird, umgeschaltet zu werden, und
einen Motor (3), um dessen Leistung auf das Antriebsrad (6) zu übertragen,
wobei das Getriebe (4) konfiguriert ist, um die eingerichtete Gangstufe als Reaktion auf eine Betätigung eines Kupplungspedals (71) und eine Betätigung eines Schalthebels (40) durch einen Fahrer auf eine andere umzuschalten,
wobei die Steuervorrichtung aufweist:
eine Steuereinheit (10), um in dem EV-Modus zu bewirken, dass die Kupplung (7, 108) ausgerückt wird, um dadurch zu bewirken, dass das Hybridfahrzeug durch die Leistung von dem Motor (3) ohne Verwendung der Leistung von der Maschine (2) fährt, wobei die Steuereinheit (10) konfiguriert ist, um während des Fahrens in dem EV-Modus eine Pseudo-Maschinenabwürgungssteuerung durchzuführen, indem ein Drehmoment des Motors (3) reduziert wird, falls eine Motordrehzahl unter eine Drehzahl fällt, die mit einer Leerlaufdrehzahl der Maschine (2) korrespondiert,
wobei die Steuervorrichtung **dadurch gekennzeichnet ist, dass**
die Steuereinheit (10) auf ein Durchführen der Pseudo-Maschinenabwürgungssteuerung eine Drehungsunterdrückungssteuerung durchführt, um eine Drehung des Antriebsrads (6) zu unterdrücken.

2. Die Steuervorrichtung nach Anspruch 1, wobei
die Steuereinheit (10) die Drehungsunterdrückungssteuerung durchführt, falls die Motordrehzahl gleich oder niedriger als eine vorbestimmte Drehzahl ist, die niedriger als die Drehzahl ist, die mit der Leerlaufdrehzahl der Maschine (2) korrespondiert.

3. Die Steuervorrichtung nach Anspruch 1 oder 2, wobei die Steuereinheit (10) die Drehung des Antriebsrads (6) unterdrückt, indem bewirkt wird, dass die Kupplung (7, 108) in der Drehungsunterdrückungssteuerung eingerückt wird.

4. Die Steuervorrichtung nach einem der Ansprüche 1 bis 3, wobei die Steuereinheit (10) die Drehungsunterdrückungssteuerung bei der Betätigung des Kupplungspedals (71) durch den Fahrer stoppt.

5. Die Steuervorrichtung nach einem der Ansprüche 2 bis 4, wobei die vorbestimmte Drehzahl in Abhängigkeit von der eingerichteten Gangstufe eingestellt wird, wobei die vorbestimmte Drehzahl umso niedriger ist, je niedriger die eingerichtete Gangstufe ist.

## Revendications

1. Dispositif de commande pour un véhicule hybride (1, 101) ayant un mode véhicule électrique, EV, en tant mode de déplacement,
le véhicule hybride comportant :
un moteur à combustion (2),
une transmission (4) configurée pour modifier la rotation du moteur à combustion (2) à un rapport de démultiplication de transmission correspondant à un étage parmi des étages de démultiplication qui est établi, et délivrer en sortie la rotation modifiée à une roue motrice (6),
un embrayage (7, 108) configuré pour être commuté entre un état mis en prise où de la puissance est transmise entre le moteur à combustion (2) et la transmission (4), et un état de libération où la puissance n'est pas transmise entre eux, et
un moteur électrique (3) pour transmettre sa puissance à la roue motrice (6),
la transmission (4) étant configurée pour commuter l'étage de démultiplication établi vers un autre en réponse à un actionnement d'une pédale d'embrayage (71) et à un actionnement d'un levier de changement de vitesse (40) par un conducteur,
le dispositif de commande comprenant
une unité de commande (10) pour amener, dans le mode EV, l'embrayage (7, 108) à être libéré pour ainsi amener le véhicule hybride à se déplacer grâce à la puissance provenant du moteur électrique (3) sans utiliser la puissance provenant du moteur à combustion (2), l'unité de commande (10) étant configurée pour réaliser, pendant le déplacement dans le mode EV, une pseudo-commande de calage de moteur à combustion consistant à réduire un couple du moteur électrique (3) si une vitesse de rotation de moteur électrique chute au-dessous d'une vitesse de rotation qui correspond à une vitesse de rotation au ralenti du moteur à combustion (2),
le dispositif de commande étant **caractérisé par**
l'unité de commande (10) réalisant, lors de la réalisation de la pseudo-commande de calage de moteur à combustion, une commande de suppression de rotation consistant à supprimer la rotation de la roue motrice (6).

2. Dispositif de commande selon la revendication 1, dans lequel
l'unité de commande (10) réalise la commande de suppression de rotation si la vitesse de rotation de moteur électrique est égale ou inférieure à une vitesse de rotation prédéterminée inférieure à la vitesse de rotation qui correspond à la vitesse de rotation au ralenti du moteur à combustion (2).

3. Dispositif de commande selon la revendication 1 ou 2, dans lequel l'unité de commande (10) supprime la rotation de la roue motrice (6) en amenant l'embrayage (7, 108) à être mis en prise pendant la commande de suppression de rotation.

4. Dispositif de commande selon l'une quelconque de la revendication 1 à 3, dans lequel l'unité de commande (10) arrête la commande de suppression de rotation avec l'actionnement de la pédale d'embrayage (71) réalisé par le conducteur.

5. Dispositif de commande selon l'une quelconque de la revendication 2 à 4, dans lequel la vitesse de rotation prédéterminée est définie en fonction de l'étage de démultiplication établi, la vitesse de rotation prédéterminée diminuant à mesure que l'étage de démultiplication établi diminue.
